# EUROPÄISCHE PATENTANMELDUNG

(11) **EP 4 574 874 A1**
(43) Veröffentlichungstag der Anmeldung: **25.06.2025**
(21) Anmeldenummer: 23217966.3
(22) Anmeldetag: 19.12.2023
(51) Int. Cl.: C08G 18/62, C08G 18/79, C09D 175/04

(54) **POLYISOCYANATGEMISCH**

(71) Anmelder: Covestro Deutschland AG, 51373 Leverkusen (DE)
(72) Erfinder: LAAS, Hans-Josef, 51519 Odenthal (DE); MUNDSTOCK, Holger, 42929 Wermelskirchen (DE)
(74) Vertreter: Levpat

(57) **Zusammenfassung**

Die vorliegende Erfindung betrifft ein Polyisocyanatgemisch, enthaltend mindestens ein Allophanat- und/oder Isocyanuratstrukturen aufweisendes HDI-Polyisocyanat M) mit einer Viskosität nach DIN EN ISO 3219:1994-10 bei 23°C von 100 bis 1600 mPas und mindestens ein PDI-Polyisocyanat N) in einem Gewichtsverhältnis zueinander von 80 : 20 bis 20 : 80. Außerdem betrifft die Erfindung die Verwendung des Polyisocyanatgemisches und eine, das Polyisocyanatgemisch enthaltende Zusammensetzung, und ein Verfahren zur Herstellung einer Beschichtung auf einem Substrat sowie das beschichtete Substrat.

## Beschreibung

Die Erfindung betrifft ein Polyisocyanatgemisch, ein Verfahren zu dessen Herstellung, sowie die Verwendung des Polyisocyanatgemisches. Weitere Gegenstände der Erfindung sind eine, das Polyisocyanatgemisch enthaltende Zusammensetzung, ein Verfahren zur Herstellung einer Beschichtung auf einem Substrat sowie das beschichtete Substrat.

Zweikomponenten-Polyurethanlacke (2K-PUR) haben aufgrund ihrer hervorragenden technologischen Eigenschaften für eine Vielzahl unterschiedlicher Anwendungsgebiete Bedeutung erlangt. Als Vernetzerkomponenten für lichtbeständige, nicht vergilbende 2K-PUR-Lacke und -Beschichtungen dienen in der Regel Polyisocyanate auf Basis linearaliphatischer bzw. cycloaliphatischer Diisocyanate.

2K-PUR-Lacke, die mit aliphatischen Polyisocyanaten, insbesondere Derivaten des Hexamethylendiisocyanats (HDI), gegebenenfalls in Kombination mit Polyisocyanaten auf Basis des cycloaliphatischen Isophorondiisocyanats (IPDI) vernetzt werden, liefern Beschichtungen hoher mechanischer und chemischer Beständigkeit und sehr guter Optik.

Trotz des bereits erreichten hohen Qualitätsniveaus der 2K-PUR-Lacke besteht im Markt ein beständiges Interesse an Beschichtungssystemen mit immer weiter verbesserten Eigenschaften, insbesondere einer verbesserter Kratzbeständigkeit.

Der Trend zu nachhaltigeren Produkten führte in den letzten Jahren auch im Bereich der Polyurethane zu einer steigenden Nachfrage nach biobasierten Rohstoffen. Dies war Anlass zur Entwicklung von Polyisocyanatvernetzern auf Basis des aus Biomasse zugänglichen 1,5-Diisocyanatopentan (im Folgenden auch Pentamethylendiisocyanat oder PDI genannt) (siehe z. B. EP-A 3 271 432 und WO 2016/169810). Unter Verwendung von biobasierten PDI-Polyisocyanaten hergestellte PUR-Lacke und -Klebstoffe zeigen ein ähnliches Eigenschaftsniveau wie solche, die mit vergleichbaren HDI-Polyisocyanaten auf petrochemischer Basis vernetzt wurden, und sind diesen in einigen Anwendungsbereichen sogar überlegen.

Ein gravierender Nachteil von PDI-Polyisocyanaten ist allerdings die Tatsache, dass sie im Vergleich zu entsprechenden HDI-Derivaten bei vergleichbarer Oligomerenverteilung höhere Viskositäten aufweisen (M. Widemann et al., ACS Sustainable Chem. Eng. 2018, 6, 9753-9759; DOI: http://dx.doi.org/10.1021/acssuschemeng.8b00758) und zu ihrer Verarbeitung in der Regel größere Mengen organischer Lösemittel benötigt werden. Gerade aber in nachhaltigen Lack- und Klebstoffsystemen ist ein möglichst geringer Anteil an flüchtigen organischen Bestandteilen gewünscht.

Insbesondere für Anwendungen, wie z. B. die Autoreparaturlackierung, bestand daher ein Bedarf an nachhaltigen Polyisocyanatgemischen, die ausreichend niedrige Viskositäten aufweisen, um sie in lösemittelarmer oder -freier Form verarbeiten zu können.

Die Aufgabe der vorliegenden Erfindung bestand somit darin, nachhaltige Polyisocyanatgemische bereitzustellen, die die ausreichend niedrige Viskositäten aufweisen, um sie in lösemittelarmer oder -freier Form verarbeiten zu können, und zu Beschichtungen mit einer verbesserten Kratzfestigkeit führen.

Diese Aufgabe wird erfindungsgemäß gelöst, durch ein Polyisocyanatgemisch, mindestens ein Allophanat- und/oder Isocyanuratstrukturen aufweisendes HDI-Polyisocyanat M) mit einer nach DIN EN ISO 3219:1994-10 bei einer Scherrate von 250 s-1 bestimmten Viskosität bei 23°C von 100 bis 1600 mPas und mindestens ein PDI-Polyisocyanat N) in einem Gewichtsverhältnis von M) zu N) von 80 : 20 bis 20 : 80.

Erfindungsgemäß bedeuten die Ausdrücke "umfassend" und "enthaltend" bevorzugt "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens ein Polyisocyanat" bedeutet daher beispielsweise, dass nur eine Art von Polyisocyanat oder mehrere verschiedene Arten von Polyisocyanaten, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %".

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Vorliegend ist der Begriff "aliphatisch" definiert als nicht-aromatische Kohlenwasserstoffgruppen, die gesättigt oder ungesättigt sind.

Vorliegend ist der Begriff "araliphatisch" definiert als aliphatische Kohlenwasserstoffreste, die gesättigt oder ungesättigt sind und mindestens einen aromatischen Substituenten aufweisen.

Vorliegend ist der Begriff "alicyclisch" oder "cycloaliphatisch" definiert als gegebenenfalls substituierte, carbocyclische oder heterocyclische Verbindungen oder Einheiten, die nicht aromatisch sind (wie z.B. Cycloalkane, Cycloalkene oder Oxa-, Thia-, Aza- oder Thiazacycloalkane). Besondere Beispiele sind Cyclohexylgruppen, Cyclopentylgruppen und ihre N- oder O-heterocyclischen Derivate wie z.B. Pyrimidin, Pyrazin, Tetrahydropyran oder Tetrahydrofuran.

Für den Fall, dass die Gruppen oder Verbindungen als "gegebenenfalls substituiert" oder "substituiert" offenbart werden, sind geeignete Substituenten -F, -Cl, -Br, -I, -OH, -OCH₃, OCH₂CH₃, -O-Isopropyl oder -O-n-Propyl, -OCF₃, -CF₃, -S-C₁₋₆-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -Cl), C₁₋₆-Alkoxy (insbesondere Methoxy und Ethoxy), Hydroxy, Trifluormethyl und Trifluormethoxy, die jeweils als Ersatz für ein an Kohlenstoff gebundenes Wasserstoffatom des betreffenden Moleküls fungieren.

Synonym für die Vielzahl unterschiedlicher Polymere mit beispielsweise Urethan-, Harnstoff- und/oder Thiourethanstrukturen, die sich aus Polyisocyanaten und H-aciden Verbindungen, wie z. B. Polyolen, Polyaminen und/oder Polythiolen, herstellen lassen, wird im Folgenden auch der allgemeine Begriff "Polyurethane" verwendet. Das erfindungsgemäße Polyisocyanatgemisch stellt eine physikalische Abmischung dar und unterscheidet sich somit von einem rein chemisch auf direktem Weg hergestellten Polyisocyanat beispielsweise hinsichtlich der mittels Gelpermeationschromatographie gemäß DIN EN ISO 13885-1:2021-11 bestimmbaren Oligomerenverteilung.

In einer ersten bevorzugten Ausführungsform des erfindungsgemäßen Polyisocyanatgemisches liegen die Polyisocyanate M) und N) in einem Gewichtsverhältnis zueinander von M) zu N) von 60 : 40 bis 20 : 80, vorzugsweise von 55 : 45 bis 25 : 75 vor.

In einer weiteren bevorzugten Ausführungsform weist das erfindungsgemäße Polyisocyanatgemisch, jeweils bezogen auf das lösemittelfreie Festharz, Farbzahlen von unter 100 APHA, vorzugsweise von unter 80 APHA, besonders bevorzugt von unter 60 APHA, und/oder einen NCO-Gehalt von 12,0 bis 25,7 Gew.-%, vorzugsweise 12,0 bis 25,0 Gew.-%, besonders bevorzugt 13,0 bis 24,5 Gew.-%, und/oder einen nach DIN EN ISO 10283:2007-11 gaschromatographisch mit internem Standard gemessenen Rest-Monomeren Gehalt von weniger als 0,14 Gew.-%, bevorzugt weniger als 0,12 Gew.-% und besonders bevorzugt weniger als 0,10 Gew.-% auf.

In einer weiteren bevorzugten Ausführungsform weist das erfindungsgemäße Polyisocyanatgemisch eine nach DIN EN ISO 3219:1994-10 bei einer Scherrate von 250 s⁻¹ gemessene Viskosität bei 23°C von weniger als 6000 mPas, bevorzugt weniger als 5000 mPas und besonders bevorzugt weniger als 4000 mPas auf.

Das gewichtsmittlere Molekulargewicht des erfindungsgemäßen Polyisocyanatgemisches als auch der einzelnen für das Gemisch verwendeten Polyisocyanate M) und N) wird im Rahmen der vorliegenden Erfindung mittels Gelpermeations-Chromatographie nach der DIN EN ISO 13885-1:2021-11unter Verwendung von Polystyrol als Standard bestimmt.

Das mindestens eine Polyisocyanat M) wird mit dem mindestens einen Polyisocyanat N) so gemischt, dass das erfindungsgemäße Polyisocyanatgemisch erhalten wird und die Polyisocyanate M) und N) im oben genannten Gewichtsverhältnis zueinander vorliegen. Dabei können durch geeignete Wahl der Mischungsverhältnisse in den genannten Grenzen Eigenschaften, wie z. B Viskosität, NCO-Gehalt und -Funktionalität, der erfindungsgemäßen Verfahrensprodukte gezielt eingestellt werden. Das Vermischen erfolgt nach beliebigen Methoden und in beliebiger Reihenfolge, bei einer Temperatur von 0 bis 60°C, vorzugsweise 10 bis 50°C, besonders bevorzugt 20 bis 40°C, gegebenenfalls unter Inertgasatmosphäre, vorzugsweise unter Ausschluss von Feuchtigkeit.

Das erfindungsgemäße Verfahren kann lösemittelfrei durchgeführt werden. Gegebenenfalls können aber auch geeignete, gegenüber den reaktiven Gruppen der Ausgangspolyisocyanate M) und N) inerte Lösemittel mitverwendet werden. Hierfür geeignet sind sowohl unter Verwendung fossiler Rohstoffe oder auch aus nachwachsenden Rohstoffen hergestellte Lösemittel, insbesondere die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Ethyl(-)-L-Lactat, Aceton, 2-Butanon, 4-Methyl-2-pentanon, Cyclohexanon, Dihydrolevoglucosenon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®}, Varsol^{®} (ExxonMobil Chemical Central Europe, Köln, DE) und Shellsol^{®} (Shell Deutschland Oil GmbH, Hamburg, DE) im Handel sind, aber auch Lösemittel wie Dimethylfuran, 2-Methyltetrahydrofuran, Dimethylisosorbid (DMI), γ-Valerolacton, Propylenglykoldiacetat, Diethylenglykoldimethylether, Dipropylenglykoldimethylether, Diethylenglykolethyl- und butyletheracetat, N-Methylpyrrolidon und N-Methylcaprolactam, oder beliebige Gemische solcher Lösemittel.

In einer bevorzugten Ausführungsform des erfindungsgemäßen Verfahrens werden 30 bis 50 Gewichtsteile des Polyisocyanates M) und 50 bis 70 Gewichtsteile des Polyisocyanates N) vermischt. Bei Mitverwendung von einem oder mehreren Lösemitteln können diese entweder in dem mindestens einen Polyisocyanat M) und/oder in dem mindestens einen Polyisocyanat N), vorzugsweise in dem mindestens einen Polyisocyanat N) bereits vor Beginn des Vermischens enthalten sein. Sie können beim erfindungsgemäßen Verfahren gegebenenfalls aber auch nach Beendigung oder zu einem beliebigen Zeitpunkt während des eigentlichen Mischvorgangs zugegeben werden.

Falls überhaupt kommen Lösemittel beim erfindungsgemäßen Verfahren in einer Menge von bis zu 50 Gew.-%, vorzugsweise bis zu 40 Gew.-%, besonders bevorzugt bis zu 30 Gew.-%, bezogen auf die Summe aus Polyisocyanat M), Polyisocyanat N) und Lösemittel zum Einsatz.

Im Folgenden werden die Polyisocyanate M) und N) weiter beschrieben und bevorzugte Ausgestaltungen genannt.

### Polyisocyanat M)

Geeignete Polyisocyanate M) für das erfindungsgemäße Verfahren sind mindestens Allophanat- und/oder mindestens Isocyanuratstrukturen enthaltende Polyisocyanate auf Basis von HDI, die eine nach DIN EN ISO 3219:1994-10 gemessene Viskosität bei 23°C von 100 bis 1600 mPas aufweisen.

Derartige Polyisocyanate sind bekannt. Ihre Herstellung ist beispielweise in Laas et al., J. Prakt. Chem. 336, 1994, 185-200, sowie in EP-A 0 330 966, EP-A 0 339 396, EP-A 0 377 177, EP-A 0 798 299, EP-A 0 000 016, EP-A 0 000 194, EP-A 0 303 150, EP-A 0 496 208, EP-A 0 524 500, EP-A 0 524 501, EP-A 0 682 012, EP-A 1 445 271, EP-A 1 939 232 und EP-A 2 358 778 beispielhaft beschrieben.

Neben Allophanat- und/oder Isocyanuratstrukturen können die Polyisocyanate M) gegebenenfalls in untergeordneten Mengen auch Strukturen weiterer Isocyanatfolgeprodukte enthalten, wie z. B. Uretdion-, Iminooxadiazindion-, Urethan-, Biuret- und/oder Oxadiazintriongruppen enthalten.

Die Gehalte (mol-%) der in den Polyisocyanaten M) vorliegenden Allophanat- und/oder Isocyanuratstrukturen und gegebenenfalls Uretdion-, Iminooxadiazindion-, Urethan-, Biuret- und/oder Oxadiazintrionstrukturen wurden aus den Integralen protonenentkoppelter ¹³C-NMR-Spektren (aufgenommen an einem Gerät Bruker DPX-400) errechnet. Im Falle von in CDCl₃ gelösten HDI-Polyisocyanaten weisen die einzelnen Strukturelemente folgende chemische Verschiebungen (in ppm) auf: Allophanat: 155.7 und 153.8, Isocyanurat: 148.4; Uretdion: 157.1; Iminooxadiazindion: 147.8, 144.3 und 135.3; Urethan: 156,3; Biuret: 155,5; Oxadiazintrion: 147,8 und 143,9.

Die Allophanat- und/oder Isocyanuratstrukturen aufweisenden Polyisocyanate M) weisen Gehalte an monomerem HDI, gaschromatographisch gemessen nach DIN EN ISO 10283:2007-11 mit internem Standard, von weniger als 0,14 Gew.-%, bevorzugt von weniger als 0,12 Gew.-% und besonders bevorzugt von weniger als 0,10 Gew.-%, bezogen auf das Gesamtgewicht des Polyisocyanates, auf.

Bevorzugt handelt es sich bei den Polyisocyanaten M) um HDI-Polyisocyanate mit Allophanat- und Isocyanuratstrukturen, die besonders bevorzugt bei 23°C eine Viskosität von 200 bis 1.500 mPas, vorzugsweise von 300 bis 1.400 mPas, und einen Gehalt an Isocyanatgruppen von 16 bis 24,5 Gew.-%, vorzugsweise von 19 bis 24 Gew.-% aufweisen.

In diesen bevorzugten Allophanat- und Isocyanuratstrukturen enthaltenden Polyisocyanaten M) beträgt der Anteil an Allophanatstrukturen in der Regel von 20 mol-% bis 70 mol-%, bevorzugt von 30 mol-% bis 65 mol-% und besonders bevorzugt von 40 mol-% bis 60 mol-%, und der Anteil an Isocyanuratstrukturen in der Regel von 30 mol-% bis 80 mol-%, bevorzugt von 35 mol-% bis 70 mol-% und besonders bevorzugt von 40 mol-% bis 60 mol-%, jeweils bestimmt durch NMR-spektroskopische Analyse und bezogen auf die Gesamtmenge an Isocyanuratgruppen und Allophanatgruppen des HDI-Polyisocyanates M).

### Polyisocyanat N)

Geeignete Polyisocyanate N) für das erfindungsgemäße Verfahren sind beliebige, durch Modifizierung von 1,5-Diisocyanatopentan (Pentamethylendiisocyanat, PDI) erhältliche oligomere Polyisocyanate mit Uretdion-, Isocyanurat-, Allophanat-, Biuret-, Iminooxadiazindion- und/oder Oxadiazintrionstruktur oder beliebige Gemische solcher PDI-Polyisocyanate. Die Herstellung dieser Polyisocyanate N) erfolgt nach an sich bekannten Methoden zur Isocyanatoligomerisierung, wie sie beispielsweise in J. Prakt. Chem. 336 (1994) 185 - 200 und EP-A 0 798 299 beschrieben sind, durch Umsetzung eines Teils der Isocyanatgruppen des PDI unter Bildung von Polyisocyanatmolekülen, die aus mindestens zwei Diisocyanatmolekülen bestehen, und einer sich in der Regel anschließenden destillativen oder extraktiven Abtrennung des nicht umgesetzten monomeren PDI. Konkrete Beispiele für derartige oligomere PDI-Polyisocyanate finden sich beispielsweise in EP-A 2 418 198, EP-A 2 684 867, JP 2010-121011, JP 2010-254764, JP 2010-265364, JP 2011-201863, JP 2012-152202, JP 2013-060542.

Das zur Herstellung der Polyisocyanate N) eingesetzte PDI ist auf verschiedene Weise, beispielsweise durch Phosgenierung in der Flüssig- oder Gasphase oder auf phosgenfreien Weg, wie z. B. durch thermische Urethanspaltung, ausgehend von vorzugsweise biotechnologisch durch Decarboxylierung der natürlich vorkommenden Aminosäure Lysin erhaltenem 1,5-Diaminopentan zugänglich.

In einer bevorzugten Ausführungsform ist das PDI-Polyisocyanat N) ein durch Modifizierung von Pentamethylendiisocyanat erhältliches Polyisocyanat mit Uretdion-, Isocyanurat-, Allophanat-, Biuret-, Iminooxadiazindion- und/oder Oxadiazintrionstruktur, bevorzugt mit Isocyanurat- und/oder Allophanatstruktur.

Gegebenenfalls können bei der Modifizierung des PDI zu Polyisocyanaten N) in untergeordneten Mengen auch weitere, von PDI verschiedene Diisocyanate und Triisocyanate mitverwendet werden. Geeignete Diisocyanate und Triisocyanate hierfür sind beliebige, auf verschiedene Weise, beispielsweise durch Phosgenierung der korrespondierenden Diamine oder Triamine, die sowohl unter Verwendung fossiler Rohstoffe oder auch aus nachwachsenden Rohstoffen, gegebenenfalls massenbilanziert hergestellt werden können, in der Flüssig- oder Gasphase oder auf phosgenfreien Weg, wie z. B. durch thermische Urethanspaltung, zugängliche Diisocyanate und Triisocyanate, vorzugsweise solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diiso-cyanatodicyclohexylmethan (H12-MDI), 4,4'-Diisocyanato-3,3'-dimethyldicyclohexylmethan, 4,4'-Diisocyanato-3,3',5,5'-tetramethyldicyclo¬hexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1-Isocyanato-1-methyl-4(3)isocyanato-methylcyclohexan, Bis-(isocyanatomethyl)-norbornan (NBDI), 4-Isocyanatomethyl-1,8-octandiisocyanat (Triisocyanatononan; TIN), 1,3- und 1,4-Bis(isocyanatomethyl)benzol (Xylylendiisocyanat, XDI), 1,3- und 1,4-Bis-(2-isocyanato-prop-2-yl)-benzol (TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (TDI), 2,3,5,6-Tetramethyl-1,4-diisocyanatobenzol, die isomeren Diethylphenylendiisocyanate, Diisopropylphenylendiisocyanate, Diisododecylphenylendiisocyanate und Biphenyldiisocyanate, 3,3'-Dimethoxybiphenyl-4,4'-diisocyanat, 2,2`-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (Naphthylendiisocyanat, NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanat, 2,4-Diisocyanato-1-[(5-isocyanato-2-methylphenyl)methyl]benzol oder Mischungen aus mindestens zwei solcher Diisocyanate und Triisocyanate.

Darüberhinaus können auch Monoisocyanate, insbesondere solche des Molekulargewichtsbereichs 99 bis 300, wie z. B. n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat, Benzylisocyanat, Phenylisocyanat oder Naphtylisocyanat, bei der Modifizierung des PDI zu Polyisocyanaten N) in untergeordneten Mengen mitverwendet werden.

Falls überhaupt kommen von PDI verschiedene Diisocyanate, Triisocyanate und/oder Monoisocyanate bei der Modifizierung des PDI zu Polyisocyanaten N) in Mengen von bis 30 Gew.-%, vorzugsweise bis zu 20 Gew.-%, besonders bevorzugt bis zu 10 Gew.-%, bezogen auf die Gesamtmenge an PDI, Mono-, Di- und Triisocyanaten, zum Einsatz.

Bevorzugt weisen die Polyisocyanate N) für das erfindungsgemäße Verfahren eine mittlere Isocyanatfunktionalität von 1,8 bis 8,0, bevorzugt von 2,0 bis 7,0 und besonders bevorzugt von 2,3 bis 6,0 aufweist und/oder einen Gehalt an Isocyanatgruppen von 6,0 bis 26,0 Gew.-%, bevorzugt 8,0 bis 25,0 Gew.-% und besonders bevorzugt von 10,0 bis 24,0 Gew.-% auf.

Besonders bevorzugte Polyisocyanatkomponenten N) sind mindestens Isocyanuratstrukturen enthaltende PDI-Polyisocyanate mit einer mittleren NCO-Funktionalität von 2,3 bis 5,0 und/oder einem Gehalt an Isocyanatgruppen von 11,0 bis 26,0 Gew.-%.

Ganz besonders bevorzugte Polyisocyanate N) sind Isocyanuratstrukturen enthaltende Polyisocyanate, die unter Verwendung von PDI als alleinigem Diisocyanat hergestellt wurden und eine mittlere NCO-Funktionalität von 2,3 bis 5,0, vorzugsweise von 2,5 bis 4,5, einen Gehalt an Isocyanatgruppen von 11,0 bis 26,0 Gew.-%, vorzugsweise von 13,0 bis 25,0 Gew.-% und einen Gehalt an monomerem PDI, gaschromatographisch gemessen nach DIN EN ISO 10283:2007-11 mit internem Standard, von weniger als 0,14 Gew.-%, bevorzugt von weniger als 0,12 Gew.-% und besonders bevorzugt von weniger als 0,10 Gew.-%, bezogen auf das Gesamtgewicht des Polyisocyanates aufweisen.

In einer weiteren bevorzugten Ausführungsform weist das PDI-Polyisocyanat N) eine Viskosität nach DIN EN ISO 3219:1994-10 bei 23°C von 2000 bis 36000 mPas, bevorzugt von 4000 bis 24000 mPas und besonders bevorzugt von 6000 bis 12000 mPas auf.

### Polyisocyanatgemisch und weitere Gegenstände der Erfindung:

Die erfindungsgemäßen Polyisocyanatgemische verhalten sich völlig kristallisationsstabil und bleiben auch bei 5°C und vierwöchiger Lagerung völlig klar und frei von Trübungen.

Die erfindungsgemäßen Polyisocyanatgemische stellen wertvolle Ausgangsmaterialien zur Herstellung von Polyurethan-Kunststoffen nach dem Isocyanat-Polyadditionsverfahren dar. Daher ist ein weiterer Gegenstand der Erfindung die Verwendung des erfindungsgemäßen Polyisocyanatgemisches oder des Polyisocyanatgemisches, erhältlich oder hergestellt, bevorzugt direkt hergestellt, durch das erfindungsgemäße Verfahren als Ausgangskomponente bei der Herstellung von Polyurethankunststoffen, bevorzugt zur Herstellung einer Beschichtung auf einem Substrat, wobei das Substrat bevorzugt eine gegebenenfalls vorbehandelte Karosserie, insbesondere von einem Fahrzeug, oder deren Teile ist.

Die erfindungsgemäßen Polyisocyanatgemische eignen sich in hervorragender Weise als Härter für Kunststoffe. Daher ist eine Zusammensetzung enthaltend entweder mindestens ein erfindungsgemäßes Polyisocyanatgemisch und mindestens ein gegenüber Isocyanatgruppen reaktives Bindemittel oder enthaltend mindestens ein erfindungsgemäßes Polyisocyanatgemisch, erhältlich oder hergestellt gemäß dem erfindungsgemäßen Verfahren, und mindestens ein gegenüber Isocyanatgruppen reaktives Bindemittel ein weiterer Gegenstand der vorliegenden Erfindung.

In einer bevorzugten Ausführungsform enthält die erfindungsgemäße Zusammensetzung das mindestens eine gegenüber Isocyanatgruppen reaktives Bindemittel in einer Komponente 1) und das mindestens eine erfindungsgemäße Polyisocyanatgemisch in einer Komponente 2) oder das mindestens eine Polyisocyanatgemisch, erhältlich oder hergestellt nach dem erfindungsgemäßen Verfahrens, in einer Komponente 2). Eine solche Zusammensetzung wird im Folgenden auch als Zweikomponenten-System bezeichnet.

Hierbei oder alternativ ist es weiterhin bevorzugt, dass das mindestens eine gegenüber Isocyanatgruppen reaktive Bindemittel eine Polyhydroxyverbindung ist, bevorzugt ein Polyetherpolyol, Polyesterpolyol, Polyurethanpolyol, Polysiloxanpolyol, Polycarbonatpolyol, Polyetherpolyamin, Polybutadienpolyol, Polyacrylatpolyol und/oder Polymethacrylatpolyol sowie deren Mischpolymerisate ist und besonders bevorzugt ein Polyesterpoylol, Polyacrylatpolyol oder beliebige Mischungen der vorgenannten ist.

Besonders bevorzugt ist es bei der erfindungsgemäßen Zusammensetzung, dass das mindestens eine gegenüber Isocyanatgruppen reaktive Bindemittel wenigstens eine hydroxyfunktionelle Verbindung mit einem Gehalt an Hydroxylgruppen von ≥ 2,0 Gew.-%, bevorzugt von ≥ 3,0 Gew.-% und besonders bevorzugt von ≥ 3,5 Gew.-% bezogen auf den Feststoffgehalt des, gegenüber Isocyanatgruppen reaktiven Bindemittels umfasst.

In einer weiteren bevorzugten Ausführungsform ist die erfindungsgemäße Zusammensetzung eine Beschichtungszusammensetzung, welche optional ein oder mehrere Hilfs- und Zusatzmittel enthält.

In einer bevorzugten Ausführungsform wird die erfindungsgemäße Zusammensetzung der Komponenten 1) und 2) im Folgenden als Zweikomponenten-System oder als Beschichtungszusammensetzung oder als Beschichtungsmittel oder als Zweikomponenten-Polyurethanlack bezeichnet, in denen als hydroxyfunktionelle Komponente die üblichen Polyetherpolyole, Polyesterpolyole, Polycarbonatpolyole und/oder Polyacrylatpolyole als Reaktionspartner für die Polyisocyanate vorliegen. Bevorzugte hydroxyfunktionelle Komponenten sind Polyacrylatpolyole, d. h. Polymerisate bzw. Copolymerisate von (Meth)acrylsäurealkylestern, gegebenenfalls mit Styrol oder anderen copolymerisierbaren olefinisch ungesättigten Monomeren.

Obwohl die erfindungsgemäßen Polyisocyanatgemische aufgrund ihrer niedrigen Viskosität lösemittelfrei eingesetzt werden können, lassen sich bei Bedarf aber auch mit üblichen Lösungsmitteln, beispielsweise den zuvor genannten, beim erfindungsgemäßen Verfahren gegebenenfalls mitzuverwendenden gegenüber Isocyanaten inerten Lösungsmitteln, trübungsfrei verdünnen. Im Allgemeinen besitzen die mit den erfindungsgemäßen Polyisocyanatgemische formulierten Beschichtungsmittel, denen gegebenenfalls die auf dem Lacksektor üblichen Hilfs- und Zusatzmittel, wie z. B. Verlaufshilfsmittel, Farbpigmente, Füllstoffe oder Mattierungsmittel, einverleibt werden können, schon bei Raumtemperaturtrocknung gute lacktechnische Eigenschaften. Selbstverständlich lassen sich die erfindungsgemäßen Zusammensetzungen jedoch auch unter forcierten Bedingungen bei erhöhter Temperatur bzw. durch Einbrennen bei Temperaturen bis 260 °C trocknen.

Beispiele geeigneter Hilfs und Zusatzmittel sind insbesondere Lichtschutzmittel wie UV-Absorber und sterisch gehinderte Amine (HALS), weiterhin Stabilisatoren, Füllstoffe sowie Antiabsetzmittel, Entschäumungs-, Antikrater- und/oder Netzmittel, Verlaufsmittel, filmbildende Hilfsmittel, Reaktivverdünner, Lösemittel, Substanzen zur Rheologiesteuerung, Slipadditive und/oder Komponenten, die das Anschmutzen verhindern und/oder die Reinigungsfähigkeit der ausgehärteten Beschichtungen verbessern, ferner Mattierungsmittel.

Der Einsatz von Lichtschutzmitteln insbesondere von UV-Absorber wie beispielsweise substituierten Benztriazolen, S-Phenyltriazinen oder Oxalaniliden sowie sterisch gehinderten Aminen insbesondere mit 2,2,6,6-Tetramethyl-piperidyl-Strukturen - als HALS bezeichnet - ist beispielhaft beschrieben in A. Valet, Lichtschutzmittel für Lacke, Vincentz Verlag, Hannover, 1996.

Stabilisatoren wie beispielsweise Radikalfänger und andere Polymerisationsinhibitoren wie sterisch gehinderte Phenole stabilisieren Lackkomponenten während der Lagerung und sollen Verfärbungen während der Aushärtung verhindern. Für die Komponente 2) kommen auch saure Stabilisatoren wie alkylsubstituerte Phosphorsäureteilester in Betracht.

Die erfindungsgemäße Zusammensetzung kann weiterhin Pigmente, Farbstoffe und/oder Füllstoffe enthalten Die dafür eingesetzten Pigmente auch Metallic- oder andere Effektpigmente, Farbstoffe und/oder Füllstoffe sind dem Fachmann bekannt.

Als Füllstoffe sind solche Verbindungen bevorzugt, die die Optik der Beschichtung nicht negativ beeinflussen. Beispiele sind Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen.

Sind Füllstoffe, Mattierungsmittel oder Pigmente in der erfindungsgemäßen Zusammensetzung enthalten, kann der Zusatz von Antiabsetzmitteln sinnvoll sein, um eine Trennung der Bestandteile bei Lagerung zu verhindern.

Netz- und Verlaufsmittel verbessern die Oberflächenbenetzung und/oder den Verlauf von Lacken. Beispiele sind Fluortenside, Silikontenside sowie spezielle Polyacrylate. Rheologiesteuernde Additive sind wichtig um die Eigenschaften der Zusammensetzung bei der Applikation und in der Verlaufsphase auf dem Substrat zu steuern und sind beispielsweise aus den Patentschriften WO 94/22968, EP-A-0 276 501 , EP-A-0 249 201 oder WO 97/12945 bekannt; vernetzte polymere Mikroteilchen, wie sie beispielsweise in der EP-A-0 008 127 offenbart sind; anorganische Schichtsilikate wie Aluminium-Magnesium-Silikate, Natrium-Magnesium und Natrium-Magnesium-Fluor-Lithium-Schichtsilikate des Montmorillonit-Typs; Kieselsäuren wie Aerosil^{®}; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate.

Die erfindungsgemäße Zusammensetzung kann lösemittelfrei eingesetzt werden, enthält aber vorzugsweise mindestens ein Lösemittel, z.B. in der Komponente 1) und/oder Komponente 2).

Geeignete Lösemittel sind in dem Fachmann bekannter Art und Weise abgestimmt auf die verwendete Zusammensetzung sowie das Applikationsverfahren einzusetzen. Lösemittel sollen die eingesetzten Komponenten lösen und deren Vermischung fördern sowie Unverträglichkeiten vermeiden. Weiterhin sollen sie während der Applikation und der Härtung die Beschichtung auf die ablaufende Vernetzungsreaktion abgestimmt verlassen, so dass eine lösemittelfreie Beschichtung mit möglichst guter Optik und ohne Fehlstellen wie Kocher oder Nadelstiche entsteht. Insbesondere kommen Lösemittel in Betracht, die in der Zwei Komponenten Technologie zur Anwendung kommen. Beispiele sind Ketone wie Aceton, Methylethylketon oder Hexanon, Ester wie Ethylacetat, Butylacetat, Methoxyproylacetat, substituierte Glykole und andere Ether, Aromaten wie Xylol oder Solventnaphtha wie z.B. der Fa. Exxon-Chemie sowie Gemische der genannten Lösemittel.

Zur Steuerung der Aushärtegeschwindigkeit können bei der Formulierung der Beschich-tungsmittel geeignete Katalysatoren mitverwendet werden, beispielsweise die in der Iso-cyanatchemie üblichen Katalysatoren, wie z. B. tertiäre Amine wie Triethylamin, Pyridin, Methylpyridin, Benzyldimethylamin, N,N-Endoethylenpiperazin, N-Methylpiperidin, Penta-methyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Bismut(III)-2-ethylhexanoat, Bismut(III)-octoat oder Molybdänglykolat.

Die erfindungsgemäßen Polyisocyanatgemische eignen sich auch als Vernetzerkomponenten für in Wasser gelöst oder dispergiert vorliegende Bindemittel oder Bindemittelkomponenten mit gegenüber Isocyanatgruppen reaktionsfähigen Gruppen, insbesondere alkoholischen Hydroxylgruppen, bei der Herstellung wäßriger Zweikomponenten-Polyurethansysteme. Sie können dabei aufgrund ihrer niedrigen Viskosität entweder als solche, d. h. in hydrophober Form, oder aber auch in nach bekannten Verfahren, z. B. gemäß EP-B 0 540 985, EP-B 0 959 087 oder EP-B 1 287 052, hydrophil modifizierter Form eingesetzt werden.

Die erfindungsgemäßen Polyisocyanatgemische können auch mit Polyaminen, wie z. B. den aus EP-B 0 403 921 bekannten, durch Umsetzung von Diaminen mit Fumarsäure- bzw. Maleinsäureestern erhältlichen Polyasparaginsäurederivaten, oder auch solchen Polyaminen, deren Aminogruppen in blockierter Form vorliegen, wie z. B. Polyketiminen, Polyaldiminen oder Oxazolanen, kombiniert werden. Aus diesen blockierten Aminogruppen entstehen unter Feuchtigkeitseinfluß freie Aminogruppen und im Falle der Oxazolane auch freie Hydroxylgruppen, die unter Vernetzung mit den Isocyanatgruppen der erfindungsgemäßen Polyisocyanatgemische abreagieren.

Die erfindungsgemäßen Polyisocyanatgemische können darüber hinaus auch mit Verbindungen kombiniert werden, die mindestens eine Thiolgruppe aufweisen.

Hierbei handelt es sich beispielsweise um die aus der EP-A 3 872 108 bekannten Polythiole, wie z. B. einfache Alkanthiole, Thioethergruppen enthaltenden Polythiole, Polyetherthiole, Polyesterthiole, aromatische Thioverbindungen und/oder Mercaptoalkohole.

Gemäß einer bevorzugten Ausführungsform können die Isocyanatgruppen der erfindungsgemäßen Polyisocyanatgemische anteilig oder vollständig mit wenigstens einem Blockierungsmittel umgesetzt sein.

Bei diesen Blockierungsmitteln handelt es sich insbesondere um, aus der Polyurethanchemie an sich bekannte Blockierungsmittel wie beispielsweise Malonsäurediethylester, Acetessigester, aktivierte cyclische Ketone, wie z. B. Cyclopentanon-2-carboxymethylester und -carboxyethylester, Acetonoxim, Butanonoxim, ε-Caprolactam, 3,5-Dimethylpyrazol, 1,2,4-Triazol, Dimethyl-1,2,4-triazol, Imidazol, Diisopropylamin, Benzyl-tert-butylamin oder beliebige Gemische dieser Blockierungsmittel.

In blockierter Form lassen sich die erfindungsgemäßen Polyisocyanatgemische auch in Kombination mit den obengenannten Lackbindemitteln oder Lackbindemittelkomponenten im Sinne von Einkomponenten-PUR-Einbrennsystemen einsetzen.

In allen Lackkombinationen liegen die erfindungsgemäßen Polyisocyanatgemische und der Reaktionspartner in solchen Mengen vor, dass auf jede gegebenenfalls blockierte Isocyanatgruppe 0,5 bis 3, vorzugsweise 0,6 bis 2,0, besonders bevorzugt 0,8 bis 1,6 gegebenenfalls blockierte, gegenüber Isocyanaten reaktive Gruppen entfallen. Gegebenenfalls können die erfindungsgemäßen Allophanatpolyisocyanate in untergeordneten Mengen aber auch nichtfunktionellen Lackbindemitteln zur Erzielung ganz spezieller Eigenschaften, beispielsweise als Additiv zur Haftverbesserung zugemischt werden.

Als Untergründe für die mit Hilfe der erfindungsgemäßen Polyisocyanatgemische formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Ein weiterer Gegenstand der Erfindung ist ein Verfahren zur Herstellung einer Beschichtung auf einem Substrat, umfassend die folgenden Schritte:
a) Bereitstellen eines gegebenenfalls vorbehandelten Substrats;
b) Aufbringen mindestens einer erfindungsgemäßen Zusammensetzung und
c) Aushärten der Zusammensetzung gegebenenfalls unter Wärmezufuhr.

Weitere Gegenstände der Erfindung sind somit Beschichtungsmittel enthaltend die erfindungsgemäßen Polyisocyanatgemische, sowie ein beschichtetes Substrat, erhältlich oder hergestellt durch das erfindungsgemäße Verfahren, wobei das gegebenenfalls vorbehandelte Substrat bevorzugt eine Karosserie, insbesondere von einem Fahrzeug, oder deren Teile ist und/oder bevorzugt einen oder mehrere der Werkstoffe ausgewählt aus Metall, Kunststoff oder deren Mischungen umfasst. Alternativ oder ergänzend ist das beschichtete Substrat zumindest anteilig mit einem erfindungsgemäßen Polyurethan, Polyharnstoff und/oder Polythiourethan und/oder mindestens einem erfindungsgemäßen Polyisocyanatgemisch und/oder mindestens einer erfindungsgemäßen Beschichtungszusammensetzung beschichtet. Die erfindungsgemäßen Polyisocyanatgemische oder erfindungsgemäßen Zusammensetzungen lassen auch sehr gut in Direct-Coating-Anwendungen nutzen und ergeben entsprechende direkt beschichtete Substrate.

Die erfindungsgemäßen Beschichtungsmittel können z.B. als Zwei-Komponenten-System, umfassend eine Vernetzerkomponente, enthaltend mindestens ein erfindungsgemäßes Polyisocyanatgemisch, und eine Bindemittelkomponente, enthaltend mindestens ein Lackbindemittel oder eine Lackbindemittelkomponente mit gegenüber Isocyanatgruppen reaktionsfähigen Gruppen, oder als Ein-Komponenten-System, enthaltend mindestens ein in blockierter Form vorliegendes erfindungsgemäßes Polyisocyanatgemisch, vorliegen. Solche Systeme sind ebenfalls Gegenstand der vorliegenden Erfindung.

Neben der bevorzugten Verwendung als Vernetzerkomponenten für lösemittelfreie, lösemittelhaltige oder wässrige 2K-PUR-Lacke eignen sich die erfindungsgemäßen Polyisocyanatgemische hervorragend als Vernetzer für lösemittelfreie oder lösemittelhaltige Klebstoffbindemittel oder wässrige Dispersionsklebstoffe, oder auch als Aufbaukomponente zur Herstellung lichtechter kompakter oder geschäumter Polyurethan-Formkörper.

Daher sind ein weiterer Gegenstand der Erfindung Polyurethane, Polyharnstoff und/oder Polythiourethane, erhältlich oder hergestellt durch Umsetzung mindestens eines erfindungsgemäßen Polyisocyanatgemisches mit wenigstens einer hydroxy-, amino- und/oder thiofunktionellen Komponente.

Die, für das erfindungsgemäße Verfahren oder das erfindungsgemäße Polyisocyanatgemisch, als bevorzugt gekennzeichneten Merkmale sind auch für die weiteren Erfindungsgegenstände bevorzugt.

Die nachfolgenden Beispiele dienen zur Verdeutlichung der vorliegenden Erfindung, sollen aber keinesfalls als Einschränkung des Schutzbereichs verstanden werden.

### Beispiele:

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Die Rest-Monomeren Gehalte wurden nach DIN EN ISO 10283:2007-11 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s-1.

Die Messung der Platin-Cobalt-Farbzahl erfolgte spektrofotometrisch nach DIN EN ISO 6271-2:2005-03 mit einem LICO 400-Spektrofotometer der Fa. Lange, DE.

Die Gehalte (mol-%) der in den Polyisocyanaten M) vorliegenden Allophanat- und/oder Isocyanuratstrukturen und gegebenenfalls Uretdion-, Iminooxadiazindion-, Urethan-, Biuret- und/oder Oxadiazintrionstrukturen wurden aus den Integralen protonenentkoppelter ¹³C-NMR-Spektren (aufgenommen an einem Gerät Bruker DPX-400) errechnet. Im Falle von in CDCI₃ gelösten HDI-Polyisocyanaten weisen die einzelnen Strukturelemente folgende chemische Verschiebungen (in ppm) auf: Allophanat: 155.7 und 153.8, Isocyanurat: 148.4; Uretdion: 157.1; Iminooxadiazindion: 147.8, 144.3 und 135.3; Urethan: 156,3; Biuret: 155,5; Oxadiazintrion: 147,8 und 143,9.

Die Trocknungseigenschaften der Beschichtungssysteme wurden nach DIN 53 150:2002-09 bestimmt.

Glanz der erhaltenen Beschichtungen wurde reflektometrisch nach DIN EN ISO 2813:1999-06 im 20°-Winkel gemessen.

Die Bestimmung der Pendeldämpfung nach König erfolgte nach DIN EN ISO 1522:2007-04 auf Glasplatten.

Zur Prüfung der Beschichtungen auf Lösungsmittelbeständigkeit wurden jeweils kleine Mengen der Lösungsmittel Xylol, 1-Methoxypropyl-2-acetat, Ethylacetat und Aceton in Reagenzgläser gegeben und mit einem Wattebausch an der Öffnung versehen, so dass eine mit Lösungsmittel gesättigte Atmosphäre innerhalb der Reagenzgläser entstand. Die Reagenzgläser wurden anschließend mit dem Wattebausch auf die Oberfläche der auf Glas applizierten Lacke gebracht und verblieben dort für 1 bzw. 5 Minuten. Nach Abwischen des Lösungsmittels wurde der Film auf Zerstörung/Erweichung/Haftverlust geprüft und bewertet (0 = keine Veränderung, 5 = Film völlig aufgelöst). Angegeben sind die Bewertungen für die vier Lösungsmittel jeweils in folgender Reihenfolge: Xylol, 1-Methoxypropyl-2-acetat, Ethylacetat, und Aceton in Form vier aufeinanderfolgender Ziffern. Die Prüfung auf Benzinbeständigkeit erfolgte analog unter Verwendung von Superbenzin E10.

Die Nasskratzbeständigkeit der Beschichtungen wurde mittels einer Labor-Waschanlage nach DIN EN ISO 20566:2010-08 geprüft. Angegeben wird der Glanzverlust in Gloss Units (GU) nach Verkratzung (10 Zyklen). Je geringer der Glanzverlust in GU, desto widerstandsfähiger ist die Beschichtung gegen Nassverkratzung.

### Polyisocyanat N1)

Isocyanuratgruppen enthaltendes PDI-Polyisocyanat, hergestellt durch katalytische Trimerisierung von PDI nach dem in der WO 2016/146579 für die Polyisocyanatkomponente A2) beschriebenen Verfahren. Die Reaktion wurde bei einem NCO-Gehalt der Rohmischung von 36,7 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes PDI durch Dünnschichtdestillation bei einer Temperatur von 140°C und einem Druck von 0,5 mbar abgetrennt.

| | |
|---|---|
| NCO-Gehalt: | 21,8 % |
| monomeres PDI: | 0,09 % |
| Viskosität (23 °C): | 9850 mPas |
| Farbzahl (Hazen): | 34 |

### Polyisocyanat N2)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass die Reaktion bei einem NCO-Gehalt der Rohmischung von 40 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt.

| | |
|---|---|
| NCO-Gehalt: | 21,7 % |
| Monomeres HDI: | 0,1 % |
| Viskosität (23°C): | 3080 mPas |
| Farbzahl (Hazen): | 18 |

### Polyisocyanat N3)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass als Katalysatorlösemittel 2-Ethylhexanol statt 2-Ethyl-1,3-hexandiol eingesetzt wurde und die Reaktion bei einem NCO-Gehalt der Rohmischung von 42,5 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt. Das Produkt wies folgende Kenndaten und Zusammensetzung auf:

| | |
|---|---|
| NCO-Gehalt: | 22,9 % |
| monomeres HDI: | 0,08 % |
| Viskosität (23°C): | 1210 mPas |
| Farbzahl (Hazen): | 10 |

### Polyisocyanat M1)

Allophanat- und Isocyanuratgruppen enthaltendes HDI-Polyisocyanat, hergestellt durch katalytische Trimerisierung von HDI in Gegenwart von n-Butanol nach Beispiel 4 der EP-A 496 208, mit der Änderung, dass die Reaktion bei einem NCO-Gehalt der Rohmischung von 36,2 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt. Das Produkt wies folgende Kenndaten und Zusammensetzung auf:

| | | |
|---|---|---|
| NCO-Gehalt: | 20,0 % | |
| monomeres HDI: | 0,06 % | |
| Viskosität (23°C): | 510 mPas | |
| Farbzahl (Hazen): | 12 | |
| Zusammensetzung: | Allophanat: | 51,0 mol-% |
| | Isocyanurat: | 47,3 mol-% |
| | Uretdion: | 1,7 mol-% |

### Beispiel 1 (Herstellung des Polyisocyanatgemisches 1)

30 Gewichtsteile des Polyisocyanates M1) wurden bei 50°C mit 70 Gewichtsteilen des Polyisocyanates N1) durch Rühren homogen gemischt. Nach Abkühlen auf Raumtemperatur lag ein erfindungsgemäßes Polyisocyanatgemisch 1 mit folgenden Kenndaten vor:

| | |
|---|---|
| NCO-Gehalt: | 21,3 % |
| monomeres HD I/PDI: | 0,02 / 0,06 % |
| Viskosität (23°C): | 3420 mPas |
| Farbzahl (Hazen): | 17 |

### Beispiel 2 (Herstellung des Polyisocyanatgemisches 2)

50 Gewichtsteile des Polyisocyanates M1) wurden bei 50°C mit 50 Gewichtsteilen des Polyisocyanates N1) durch Rühren homogen gemischt. Nach Abkühlen auf Raumtemperatur lag ein erfindungsgemäßes Polyisocyanatgemisch 2 mit folgenden Kenndaten vor:

| | |
|---|---|
| NCO-Gehalt: | 20,9 % |
| monomeres HD I / PDI: | 0,03 / 0,05 % |
| Viskosität (23°C): | 1950 mPas |
| Farbzahl (Hazen): | 15 |

### Beispiel 3 - 6 (Beschichtungszusammensetzung und Beschichtung, erfindungsgemäß und Vergleich)

166,9 Gew.-Teile des handelsüblichen Polyacrylatpolyols Uralac CY240 EF-75 (Covestro AG, Leverkusen, DE) mit einem Festkörpergehalt von 74 Gew.-% und einem OH-Gehalt (bezogen aufden Festkörper) von 4,0 %, entsprechend einem Äquivalentgewicht von 425 g/val OH, wurden mit 2,9 Gew.-Teilen einer 10 %igen Lösung eines handelsüblichen Verlaufsadditivs (BYK 331; BYK-Chemie GmbH, Wesel, DE) in Butylacetat, 5,8 Gew.-Teilen einer 1 %igen Lösung von Dibutylzinndilaurat (DBTL) in Butylacetat als Katalysator, 1,9 Gew.-Teilen einer 50 %igen Lösung eines handelsüblichen Lichtstabilisators (Tinuvin 123; BASF SE, Ludwigshafen, DE), Tinuvin 384-2 (BASF SE, Ludwigshafen, DE) eingesetzt jeweils als 50 %ige Lösung in Butylacetat) und dem handelsüblichen Oberflächenadditiv BYK-358 N (BYK-Chemie GmbH, Wesel, DE; eingesetzt in Lieferform) durch intensives Rühren bei Raumtemperatur homogen vermischt. Anschließend wurde durch Zugabe eines zu gleichen Gew.-Teilen aus Butylacetat und Xylol bestehenden Lösemittelgemisches und weiteres intensives Rühren ein nicht flüchtiger Anteil von 68 Gew.-% eingestellt.

In diese Stammlackkomponente (Komponente A) wurden die erfindungsgemäßen Polyisocyanatgemische bzw. Vergleichspolyisocyanate (Komponenten B) eingerührt und der Festkörpergehalt der fertigen Beschichtungsmittel mit Butylacetat / Xylol (1 : 1) auf eine Auslaufzeit von ca. 20 s im ISO-Becher mit 4 mm Düse eingestellt.

**Tabelle 1: Zusammensetzungen der einzelnen Formulierungen**

| **Beispiel** | **3** | **4** | **5** (Vergleich) | **6** (Vergleich) |
|---|---|---|---|---|
| **Komponente A** | | | | |
| Stammlack | 221,2 | 221,2 | 221,2 | 221,2 |

| **Komponente B** | | | | |
|---|---|---|---|---|
| Polyisocyanatgemisch 1 | 69,8 | | | |
| Polyisocyanatgemisch 2 | | 71,1 | | |
| Polyisocyanat N2) | | | 68,5 | |
| Polyisocyanat N3) | | | | 64,9 |
| Butylacetat / Xylol | 102,2 | 103,2 | 101,2 | 98,4 |
| Summe Gew.-Teile | 393,2 | 395,5 | 390,9 | 384,5 |
| NCO:OH | 1 : 1 | 1 : 1 | 1 : 1 | 1 : 1 |
| Feststoffgehalt bei Applikation [%] | 56,0 | 56,0 | 56,0 | 56,0 |

Zur Bestimmung der Pendeldämpfung nach König und Prüfung der Lösemittel- und Benzinbeständigkeit wurden die Beschichtungsmittel jeweils mittels einer Fließbecherpistole in einer Nassfilmschichtdicke von 150 µm auf Glasplatten aufgebracht und nach 10 minütigem Ablüften bei Raumtemperatur innerhalb von 30 Minuten bei 60°C ausgehärtet. Alle Glasplatten wurden vor dem Testen für mindestens 48 h bei Raumtemperatur gelagert.

Zur Bestimmung der Kratzfestigkeit wurden die Beschichtungsmittel mittels einer Fließbecherpistole als Klarlacke auf KTL-Bleche appliziert (Trockenschichtdicke ca. 50 µm), die zuvor mit einem handelsüblichen 1K-OEM-Hydrofüller (Trockenschichtdicke ca. 35µm) und einem schwarzen 1K-OEM-Hydrobasislack (Trockenschichtdicke ca. 15µm) beschichtet worden waren, und innerhalb von 30 Minuten bei 60°C ausgehärtet. Alle Bleche wurden vor Prüfung mindestens 48 h bei Raumtemperatur gelagert.

**Tabelle 2: Ergebnisse der anwendungstechnischen Prüfungen**

| **Beispiel** | | **3** | **4** | **5** (Vergleich) | **6** (Vergleich) |
|---|---|---|---|---|---|
| **Prüfungen auf Glas** | | | | | |
| **Pendelhärte** | 1 d | 86 | 78 | 97 | 95 |
| | 3 d | 152 | 155 | 159 | 166 |
| | 7 d | 181 | 178 | 190 | 185 |
| **Lösemittelbeständigkeit** (7 | 1 min | 1/1/2/4 | 1/2/2/4 | 1/2/3/3-4 | 1/2/3/4 |
| | 5 min | 2/2/4/4 | 2/2/4/5 | 2/2/5/5 | 2/2/4/4 |
| **Benzinbeständigkeit** (1/5 | 1 d | 2/2-3 | 2-3/3 | 1-2/2 | 2-3/3 |
| | 3 d | 0/1 | 0/1 | 0/1 | 0/0-1 |
| | 7 d | 0/0 | 0/0 | 0/0 | 0/0 |

| **Prüfungen auf Komplettaufbau** | | | | | |
|---|---|---|---|---|---|
| Schichtdicke | | 54 | 55 | 43 | 52 |

| **Laborwaschanlage** | | | | | |
|---|---|---|---|---|---|
| Ausgang | Haze | 17,2 | 17,1 | 15,4 | 16,3 |
| nach Verkratzung | Haze | 49,0 | 45,7 | 46,2 | 49,0 |
| D | Haze | 31,8 | 28,6 | 30,8 | 32,7 |
| nach Reflow (2 h / 60°C) | Haze | 28,0 | 27,6 | 24,9 | 25,6 |
| Ausgang | Glanz 20° | 91,9 | 91,5 | 91,8 | 92,1 |
| nach Verkratzung | Glanz 20° | 73,4 | 74,8 | 74,7 | 72,6 |
| D | Glanz 20° | 18,5 | 16,7 | 17,1 | 19,5 |
| nach Reflow (2 h / 60°C) | Glanz 20° | 86,3 | 86,4 | 87,1 | 86,8 |
| **Restglanz nach Verkratzung** | **%** | **79,9** | **81,7** | **81,4** | **78,8** |
| **Restglanz nach Reflow** | **%** | **93,9** | **94,4** | **94,9** | **94,2** |

Der Vergleich der Beispiele 3 und 4 mit den Vergleichsbeispielen 5 und 6 zeigt, dass die Verwendung der erfindungsgemäßen Polyisocyanatgemische 1 und 2, die hohe Anteile des biobasierten PDI enthalten aber deutlich niedrigere Viskositäten aufweisen als das PDI-Polyisocyanat N1), als Vernetzer für Autoreparaturklarlacke zu Beschichtungen mit vergleichbaren lacktechnischen Eigenschaften führt wie die Vernetzung mit den Standard-HDI-Trimeren N2) und N3).

## Patentansprüche

1. Polyisocyanatgemisch, enthaltend mindestens ein Allophanat- und/oder Isocyanuratstrukturen aufweisendes HDI-Polyisocyanat M) mit einer nach DIN EN ISO 3219:1994-10 bei einer Scherrate von 250 s-1 bestimmten Viskosität bei 23°C von 100 bis 1600 mPas und mindestens ein PDI-Polyisocyanat N) in einem Gewichtsverhältnis zueinander von 80 : 20 bis 20 : 80.

2. Polyisocyanatgemisch nach Anspruch 1, **dadurch gekennzeichnet, dass** das Gewichtsverhältnis des HDI-Polyisocyanates M) und des PDI-Polyisocyanates N) zueinander 60 : 40 bis 20 : 80 und bevorzugt 55 : 45 bis 25 : 75 beträgt.

3. Polyisocyanatgemisch nach Anspruch 1 oder 2, **dadurch gekennzeichnet, dass** es einen NCO-Gehalt bestimmt nach DIN EN ISO 11909:2007-05 von 12,0 bis 25,7 Gew.-%, vorzugsweise 12,0 bis 25,0 Gew.-%, besonders bevorzugt 13,0 bis 24,5 Gew.-% aufweist.

4. Polyisocyanatgemisch nach einem der Ansprüche 1 bis 3, **dadurch gekennzeichnet, dass** das PDI-Polyisocyanat N) eine Viskosität nach DIN EN ISO 3219:1994-10 bei 23 °C von 2000 bis 36000 mPas, bevorzugt von 4000 bis 24000 mPas und besonders bevorzugt von 6000 bis 12000 mPas aufweist.

5. Polyisocyanatgemisch nach einem der Ansprüche 1 bis 4, **dadurch gekennzeichnet, dass** das PDI-Polyisocyanat N) ein durch Modifizierung von Pentamethylendiisocyanat erhältliches Polyisocyanat mit Uretdion-, Isocyanurat-, Allophanat-, Biuret-, Iminooxadiazindion- und/oder Oxadiazintrionstruktur, bevorzugt mit Isocyanurat- und/oder Allophanatstruktur ist.

6. Polyisocyanatgemisch nach einem der Ansprüche 1 bis 5, **dadurch gekennzeichnet, dass** das PDI-Polyisocyanat N) eine mittlere Isocyanatfunktionalität von 2,3 bis 5,0 und/oder einen Gehalt an Isocyanatgruppen von 11,0 bis 26,0 Gew.-% aufweist und/oder ein Isocyanuratstrukturen enthaltendes Polyisocyanat ist, welches unter Verwendung von Pentamethylendiisocyanat als alleinigem Diisocyanat hergestellt wurde.

7. Polyisocyanatgemisch nach einem der Ansprüche 1 bis 6, **dadurch gekennzeichnet, dass** das HDI-Polyisocyanat M) Allophanat- und Isocyanuratstrukturen aufweist.

8. Polyisocyanatgemisch nach einem der Ansprüche 1 bis 7, **dadurch gekennzeichnet, dass** das HDI-Polyisocyanat M) einen Allophanatgruppenanteil von 20 mol-% bis 70 mol-%, bevorzugt 30 mol-% bis 65 mol-% und besonders bevorzugt 40 mol-% bis 60 mol-%, und einen Isocyanuratgruppenanteil von 30 mol-% bis 80 mol-%, bevorzugt 35 mol-% bis 70 mol-% und besonders bevorzugt 40 mol-% bis 60 mol-%, jeweils bestimmt durch NMR-spektroskopische Analyse und bezogen auf die Gesamtmenge an Isocyanuratgruppen und Allophanatgruppen des Polyisocyanatgemisches M), aufweist.

9. Verfahren zur Herstellung eines Polyisocyanatgemisches nach einem der Ansprüche 1 bis 8, **dadurch gekennzeichnet, dass** mindestens ein Allophanat- und/oder Isocyanuratstrukturen aufweisendes HDI-Polyisocyanat M) und mindestens ein PDI-Polyisocyanat N) vermischt werden, so dass die Polyisocyanate M) und N) einem Gewichtsverhältnis zueinander 80 : 20 bis 20 : 80, bevorzugt von 60 : 40 bis 20 : 80, besonders bevorzugt von 55 : 45 bis 25 :75, vorliegen.

10. Zusammensetzung enthaltend entweder mindestens ein Polyisocyanatgemisch nach einem der Ansprüche 1 bis 8 und mindestens ein gegenüber Isocyanatgruppen reaktives Bindemittel oder enthaltend mindestens ein Polyisocyanatgemisch, erhältlich oder hergestellt gemäß einem Verfahren nach Anspruch 9, und mindestens ein gegenüber Isocyanatgruppen reaktives Bindemittel.

11. Zusammensetzung nach Anspruch 10, **dadurch gekennzeichnet, dass** sie das mindestens eine gegenüber Isocyanatgruppen reaktives Bindemittel in einer Komponente 1) und das mindestens eine Polyisocyanatgemisch nach einem der Ansprüche 1 bis 8 in einer Komponente 2) oder das mindestens eine Polyisocyanatgemisch, erhältlich oder hergestellt gemäß einem Verfahren nach Anspruch 9, in einer Komponente 2) enthält und/oder dass das mindestens eine gegenüber Isocyanatgruppen reaktive Bindemittel eine Polyhydroxyverbindung, bevorzugt ein Polyetherpolyol, Polyesterpolyol, Polyurethanpolyol, Polysiloxanpolyol, Polycarbonatpolyol, Polyetherpolyamin, Polybutadienpolyol, Polyacrylatpolyol und/oder Polymethacrylatpolyol sowie deren Mischpolymerisate und besonders bevorzugt ein Polyesterpoylol, Polyacrylatpolyol oder beliebige Mischungen der vorgenannten, ist.

12. Zusammensetzung nach Anspruch 10 oder 11, **dadurch gekennzeichnet, dass** das mindestens eine gegenüber Isocyanatgruppen reaktive Bindemittel wenigstens eine hydroxyfunktionelle Verbindung mit einem Gehalt an Hydroxylgruppen von ≥ 2,0 Gew.-%, bevorzugt von ≥ 3,0 Gew.-% und besonders bevorzugt von ≥ 3,5 Gew.-% bezogen auf den Feststoffgehalt des, gegenüber Isocyanatgruppen reaktiven, Bindemittels umfasst.

13. Verwendung eines Polyisocyanatgemisches nach einem der Ansprüche 1 bis 8 oder einer Zusammensetzung nach einem der Ansprüche 10 bis 12 zur Herstellung einer Beschichtung auf einem Substrat, wobei das Substrat bevorzugt eine gegebenenfalls vorbehandelte Karosserie, insbesondere von einem Fahrzeug, oder deren Teile ist.

14. Polyurethan, Polyharnstoff und/oder Polythiourethan, erhältlich oder hergestellt durch Umsetzung mindestens eines Polyisocyanatgemisches gemäß einem der Ansprüche 1 bis 8 mit wenigstens einer hydroxy-, amino- und/oder thiofunktionellen Komponente.

15. Verfahren zur Herstellung einer Beschichtung auf einem Substrat, umfassend die folgenden Schritte:
a) Bereitstellen eines gegebenenfalls vorbehandelten Substrats;
b) Aufbringen mindestens einer Zusammensetzung nach einem der Ansprüche 10 bis 12;
c) Aushärten der Beschichtungszusammensetzung gegebenenfalls unter Wärmezufuhr.

16. Beschichtetes Substrat, erhältlich oder hergestellt durch ein Verfahren nach Anspruch 15, wobei das gegebenenfalls vorbehandelte Substrat bevorzugt eine Karosserie, insbesondere von einem Fahrzeug, oder deren Teile ist und/oder bevorzugt einen oder mehrere der Werkstoffe ausgewählt aus Metall, Kunststoff oder deren Mischungen umfasst.
